(19) Europäisches Patentamt
European Patent Office
Office européen des brevets

(11) Veröffentlichungsnummer: **0 196 595**
**B1**

(12) # EUROPÄISCHE PATENTSCHRIFT

(45) Veröffentlichungstag der Patentschrift:
**01.06.88**

(51) Int. Cl.⁴: **A 23 L 1/235**

(21) Anmeldenummer: **86104041.8**

(22) Anmeldetag: **24.03.86**

(54) **Aromastoff und diesen enthaltende Aromakompositionen.**

(30) Priorität: **04.04.85 DE 3512339**

(43) Veröffentlichungstag der Anmeldung:
**08.10.86 Patentblatt 86/41**

(45) Bekanntmachung des Hinweises auf die Patenterteilung:
**01.06.88 Patentblatt 88/22**

(84) Benannte Vertragsstaaten:
**CH DE FR GB IT LI NL**

(56) Entgegenhaltungen:
**JOURNAL OF FOOD SCIENCE, Band 47, 1982, Seiten 1444-1453; R.J. PETERSON et al.: "Identification of volatile flavor compounds of fresh, frozen beef stew and a comparison of these with those of canned beef stew" AGRICULTURAL AND BIOLOGICAL CHEMISTRY, Band 45, Nr. 2, Februar 1981, Seiten 373-377, Tokyo, JP; I. YAJIMA et al.: "Volatile flavor compounds of matsutake-Tricholomam atsutake (ITO et IMAI) Sing.-"**

(73) Patentinhaber: **Haarmann & Reimer GmbH, Postfach 1253, D-3450 Holzminden (DE)**

(72) Erfinder: **Brüning, Jürgen, Dr., Sparenbergstrasse 39, D-3450 Holzminden (DE)**
Erfinder: **Emberger, Roland, Dr., Bärenfang 4, D-3450 Holzminden (DE)**
Erfinder: **Hopp, Rudolf, Dr., Auf dem Gehrenkamp 28, D-3450 Holzminden (DE)**
Erfinder: **Sand, Theodor, Dr., Vogeisang 3., D-3450 Holzminden (DE)**

(74) Vertreter: **Schumacher, Günter, Dr. et al, c/o Bayer AG Konzernverwaltung RP Patentabteilung, D-5090 Leverkusen 1 Bayerwerk (DE)**

# Beschreibung

Die Erfindung betrifft die Verwendung von 2-Octen-4-ol als Aromastoff in Fruchtaromen sowie diese Verbindung enthaltende Aromastoffkompositionen für Fruchtaromen.

Die Verbindung 2-Octen-4-ol ist bekannt, sie wurde als Ausgangsmaterial bei Untersuchungen von Spaltreaktionen von α, β-ungesättigten Carbinolen in Gegenwart von Alkali eingesetzt (J. Chem. Soc. *1947*, 756). In J. Food Science *47*, 1444 (1982) wird 2-Octen-4-ol als mutmasslicher Bestandteil der flüchtigen Aromabestandteile von frischem, gefrorenem Rinder-Eintopf erwähnt. Angaben zu organoleptischen Eigenschaften von 2-Octen-4-ol sind nicht bekannt.

Es wurde nun überraschend gefunden, dass 2-Octen-4-ol ausgezeichnete organoleptische Eigenschaften aufweist, die es zu einem wertvollen Aromastoff machen. 2-Octen-4-ol zeichnet sich durch einen relativ niedrigen Geschmacksschwellenwert (30 ppb in 5%iger Zuckerlösung) aus. Bei einer Dosierung von 0,5 ppm in 5%iger Zuckerlösung lautet die Geschmacksbeschreibung «sehr typisch überreife Kirsche, fruchtig, saftig, Apfel, Birnenschale». Neben seiner spezifischen Charakterisierung in Richtung Kirsche bewirkt 2-Octen-4-ol in Aromakompositionen interessante Geschmackseffekte. So werden z. B. bei Fruchtaromen die saftigen Noten hervorgehoben, die Fruchtfülle unterstützt und die Natürlichkeit im Aromacharakter verstärkt.

Die Erfindung betrifft daher die Verwendung von 2-Octen-4-ol in Fruchtaromen, ferner Aromastoffkompositionen für Fruchtaromen, die 2-Octen-4-ol enthalten.

Die unter Verwendung von 2-Octen-4-ol hergestellten Aromakompositionen können im gesamten Nahrungs- und Genussmittelbereich eingesetzt werden. Insbesondere sind sie geeignet für Fondantmassen, Geleefrüchte, Bonbons, Milchprodukte, Dessertspeisen, Getränke und Spirituosen.

Das erfindungsgemäss zu verwendende 2-Octen-4-ol wird in Mengen von 30 ppb bis 100 ppm, vorzugsweise 0,1 ppm bis 10 ppm, bezogen auf das verzehrfertige Nahrungs- oder Genussmittel verwendet.

2-Octen-4-ol kann nach dem in J. Chem. Soc. *1947*, 757 beschriebenen Verfahren durch Umsetzung von Butylmagnesiumbromid mit Crotonaldehyd oder durch Umsetzung einer Butyllithium-Lösung in Toluol mit Crotonaldehyd hergestellt werden.

*Beispiel 1:*

Zu 32 g Butyllithium, gelöst in 145,8 g Toluol, werden bei −20° C innerhalb von 75 Minuten 31,5 g Crotonaldehyd zugetropft. Nach zweistündiger Reaktion, wobei die Temperatur langsam auf 0° C ansteigt, werden vorsichtig 250 ml Wasser zugetropft. Die wässrige Phase wird abgetrennt und einmal mit 100 ml Toluol gewaschen. Die vereinigten organischen Phasen werden mit Wasser neutralgewaschen, über Natriumsulfat getrocknet und destilliert. Es werden 46 g 2-Octen-4-ol vom Kp. 68-72°/13 mb erhalten. Laut Gaschromatogramm beträgt die Reinheit 96%. Das NMR-Spektrum stimmt mit der erwarteten Struktur überein.

*Beispiel 2:*

Eine Aromakomposition mit Kirscharoma wird durch Mischen der folgenden Bestandteile hergestellt:

| | |
|---|---|
| Eugenol | 2 |
| Heliotropin | 5 |
| Vanillin | 5 |
| Maltol | 5 |
| Geranylbutyrat | 30 |
| Benzaldehyd | 40 |
| p-Tolylaldehyd 10% in Ethanol | 25 |
| Triacetin | 888 |
| | 1000 |

Das vorstehende Aroma wird in einer Menge von 10 g je 100 l Getränk eingesetzt. Die Lösung hat einen deutlichen Kirschgeschmack.

Werden in der vorstehenden Aromarezeptur die 50 Teile Triacetin durch 50 Teile 2-Octen-4-ol ersetzt, so gewinnt die aromatisierte Lösung ein wesentlich typischeres, volleres, natürlicher wirkendes Kirschsaft-Aroma.

*Beispiel 3:*

Eine Aromakomposition mit Pflaumenaroma wird durch Mischen der folgenden Bestandteile hergestellt:

| | |
|---|---|
| Dimethylbenzylcarbinylbutyrat | 50 |
| Benzaldehyd | 20 |
| Weinhefeöl | 5 |
| γ-Undecalacton | 5 |
| Vanillin | 50 |
| Maltol | 10 |
| Mandarinenöl | 5 |
| Propylenglycol | 855 |
| | 1000 |

Das vorstehende Aroma wird in einer Menge von 10 g je 100 l 5%iger Zuckerlösung eingesetzt. Die Lösung hat einen deutlichen Pflaumengeschmack.

Werden in der vorstehenden Aromarezeptur die 20 Teile Propylenglycol durch 20 Teile 2-Octen-4-ol ersetzt, so gewinnt die aromatisierte Zuckerlösung ein viel ausgeprägteres, volleres und natürlicher wirkendes Pflaumenaroma.

## Patentansprüche

1. Verwendung von 2-Octen-4-ol in Fruchtaromen.

2. Aromastoffkompositionen für Fruchtaromen enthaltend 2-Octen-4-ol.

## Claims

1. Use of oct-2-en-4-ol in fruit aromas.

2. Aroma compositions containing oct-2-en-4-ol, for fruit aromas.

## Revendications

1. Utilisation du 2-octène-4-ol dans la production d'arômes de fruits.

2. Compositions d'aromates pour arômes de fruits, contenant du 2-octène-4-ol.